# EUROPEAN PATENT APPLICATION

(11) **EP 3 293 837 A1**
(43) Date of publication of application: **14.03.2018**
(21) Application number: 16188142.0
(22) Date of filing: 09.09.2016
(51) Int. Cl.: H01S 3/00, G02F 1/39

(54) **MEASUREMENT DEVICE**

(71) Applicant: GSI Helmholtzzentrum für Schwerionenforschung GmbH, 64291 Darmstadt (DE); Technische Universität, 64289 Darmstadt (DE)
(72) Inventor: Bagnoud, Vincent, 64331 Weiterstadt (DE); Roth, Markus, 64347 Griesheim (DE); Schanz, Victor, 64291 Darmstadt (DE); Wagner, Florian, 64287 Darmstadt (DE)

(57) **Abstract**

A laser pulse contrast ratio measurement device is presented, the device comprising a laser pulse generator for generating a sum frequency laser pulse, the laser pulse generator providing an interaction zone, a beam guide device having a first beam guide for guiding a reference beam to said interaction zone in said laser pulse generator and a second beam guide for guiding a probe beam to said interaction zone in said laser pulse generator. The device further comprises a detection unit for detecting the sum frequency laser pulse generated in said laser pulse generator. The probe beam has a probe beam frequency, whereas the reference beam has a reference beam frequency, wherein the reference beam frequency corresponds to the second harmonic of the probe beam frequency. The beam guide device of said device is adapted to direct the reference beam and the probe beam in a non-collinear manner under an interaction angle on said laser pulse generator so that the probe beam and the reference beam interact in the interaction zone of the laser pulse generator so as to generate the sum frequency laser pulse in the laser pulse generator, and wherein the beam guide device is adjusted to provide the interaction angle between the reference beam and the probe beam in the interaction zone in the laser pulse generator to be greater than 3°.

## Description

### Field of the invention

The invention is related to measurement devices for characterization of the temporal contrast of laser pulses as well as to a method for measuring said temporal contrast.

### Background and Summary of the invention

The characterization of the temporal contrast of laser pulses is necessary for many applications involving for instance the interaction of pulses generated by ultra-high intensity lasers with matter. Such lasers are nowadays found in research laboratories around the world, e.g. in Europe, Russia, USA, Korea, Japan or China, either as self-developed or procured machines that are almost uniquely based on the chirped pulse amplification technique and deliver peak powers from the terawatt to the multi-petawatt level. When the laser pulse is focused, intensities in a region of 10 to 11 orders of magnitude above the ionization threshold of materials are generated. This ultra-high on-target intensity requires that the pulse profile be characterized over a large dynamic range from below the ionization threshold to the peak of the pulse.

Due to possible unwanted generation of pre-plasma in the laser-matter interaction, not only the maximal intensity of the laser pulse is of interest, but for high intensity laser beams also the pedestal (pre-pulse) intensity is of interest. This is due to the fact, that a low contrast ratio laser pulse can generate said pre-plasma before the arrival of the laser pulse peak intensity and widely change the interaction between the laser pulse and the target.
For example, the presence of pre-plasma near the target surface before the arrival of the laser pulse peak intensity may modify the electron density gradient and the nature of the processes leading to laser energy absorption in the target. Further, the presence of a pre-intensity before the arrival of the laser pulse peak intensity may even lead to damage or destruction of the target, e.g. in the case of a thin foil target.

Additionally, by being capable of detecting the pedestal intensity of the laser pulse, artefacts like imperfect pulse compression e.g. due to deficient laser spectrum manipulations or amplified fluorescence produced by the pumped crystal during the amplification process can be observed. The latter of said is also known as Amplification of Spontaneous Emission (ASE) which is known to produce a plateau shaped pedestal amplitude. With simply increasing the laser pulse maximal intensity, said ASE increases concomitantly and as a result may even lead to generation of said pre-plasma itself.

However, the maximal pulse intensity of short high power laser pulses has been continuously increasing over the last decades. At the same time, techniques have been developed to decrease noise of such laser pulses. As a consequence, the contrast ratio (or "contrast") of the laser pulse - wherein the contrast ratio R is defined as the ratio of the maximal intensity of the laser pulse signal Iₘₐₓ to an intensity of the laser pulse signal at a certain point in time before the maximum, which is the pedestal intensity I_{ped}, resulting in R = Iₘₐₓ / I_{ped} - increased. At present, it is of eager interest to provide a measurement device capable of detecting the contrast ratio of modern short pulse high intensity lasers, or even to detect the whole signal shape of the short pulse high intensity laser. The knowledge of said is used for planning and interpretation of modern experimental setups but as well for planning new laser beam facilities, and for improving the results to be obtained by treating any target matter with the laser beam.

In order to characterize the contrast ratio, different measurement techniques and devices are known, but are insufficient to provide a dynamic range of more than 11 orders of magnitude. For example, the principles of second-order and third-order cross-correlators are known and widely used in research laboratories.

However, second-order cross-correlators suffer from high background noise at the same frequency as the correlation signal, which limits the dynamic range of said available second-order cross-correlators to about 6 orders of magnitude and therefore are way from being able to provide the desired dynamic range of more than 11 orders of magnitude.

To overcome this limitation, third-order cross-correlators have been developed, wherein a third-order signal is generated. The signal at the third harmonic can be provided with markedly reduced background noise at the third harmonic frequency, so that a higher dynamic range is obtainable. However, still problems persist leading to the fact that at present no such cross-correlators are known which are able to cover more than 11 orders of magnitude, thus sufficient to measure ultra-high contrast ratios.
For example, commercially available products as e.g. Sequoia from Amplitude Technologies, Tundra from Ultrafast innovations or Comet by Avesta, advertise a measurable contrast of up to 9 to 11 orders of magnitude, which is still not enough to cover more than 11 orders of magnitude.

There also exist single-shot measurement systems and development focused in the last decade on such single-shot applications. The dynamic range of single-shot systems, either based on interferometric or optical cross-correlation, however, up to now does not exceed 60 dB of signal-to-noise-ratio.

In addition to a high contrast to be measured, another aspect of interest is the temporal window which can be measured in. Pre-pulses (e.g. small pulses significantly above the pedestal noise but below the "main peak") are a problem for most applications and therefore need to be identified and eliminated. In a cross-correlator post-pulses create artefacts which might be mistaken as pre-pulses in the measured profile and vice versa. To distinguish between real side-pulses and artefacts, the measurement of the pre- and the corresponding post-pulse is of interest. The known cross-correlators only work in a temporal domain around some hundred picoseconds around the main laser beam peak and mainly measure the rising slope of the pulse only. As new photodiodes allow for a temporal resolution in the order of nanoseconds, a detector is of interest which is able to "fill" the temporal resolution detectable by such a new photodiode. Thus, a greater temporal window in the range of nanoseconds is desirable which allows for a better characterization of the laser pulse including pre-pulse and post-pulse.

Therefore it is an object of the invention to provide a measurement device capable of measuring ultra-high contrast ratios of more than 11 orders of magnitude, e.g. more than 12 orders of magnitude, which allows to analyse modern laser beams, for example short pulse high intensity laser beams in the picosecond and femtosecond regimes.

Another object solved by the invention is to provide a measurement device delivering over an ultra-high contrast regime a signal which is for the most part independent of the intensity of the incoming laser beam.

Yet another aspect of the object of the invention is to improve or eliminate the limitations or drawbacks mentioned above.

The object of the invention is achieved by subject matter of the independent claims. Preferred embodiments of the invention are subject of the dependent claims.

Preferred embodiments of the invention may also solve further problems discussed in comparison to prior art. For example, in a preferred embodiment an improved temporal window can be obtained which allows for resolving the whole laser pulse peak in a temporal window of e.g. up to 2.8 nanoseconds (ns).

The present invention improves the dynamic range, e.g. the signal-to-noise-ratio of the achieved signal, by improving the signal achievable by the device as well as by reducing the noise level produced by the device itself, as will be described in detail in the following.

The proposed device is mainly used to measure the contrast ratio of an incoming laser pulse, wherefore it is labelled a laser pulse contrast ratio (LPCR) measurement device. The device however may also be able to resolve, by way of example, absolute signal amplitudes of the peak amplitude and the respective noise floor pedestal amplitude ahead (pre-pulse) and/or after the peak amplitude (post-pulse). Preferably, the proposed device is also capable to measure, e.g. in small femtosecond (fs) fractions, along the probe signal so as to successively "scan" the probe signal and to gain information about at least part of the - or even the whole - signal sequence as will be explained later on.

In the laser pulse contrast ratio (LPCR) measurement device, two primary laser beams are guided by a beam guide device to a laser pulse generator, e.g. a non-linear medium., More precisely, the two beams are guided to an interaction zone in the laser pulse generator. In this laser pulse generator (non-linear medium), a sum frequency laser pulse is generated by interaction of the two primary laser beams in the laser pulse generator. In other words, said sum frequency laser pulse is only generated - given further conditions are fulfilled - when the both primary laser beams are coincidently present in the interaction zone of the laser pulse generator. In a first embodiment, both primary laser beams develop from a laser pulse being directed on a beam splitter, wherein in the beam splitter the laser pulse is split into a probe beam and a reference beam, the probe beam and the reference beam constituting said primary laser beams.

Thus, the laser pulse contrast ratio (LPCR) measurement device according to the invention comprises a laser pulse generator for generating a sum frequency laser pulse. The laser pulse generator may, by way of example, be a third-order laser pulse generator. The sum frequency laser pulse is generated by interaction of the probe beam and the reference beam in the laser pulse generator. Said laser pulse generator provides an interaction zone.

The laser pulse contrast ratio measurement device further comprises a beam guide device. The beam guide device of the laser pulse contrast ratio measurement device has a first beam guide for guiding the reference beam to said interaction zone in said laser pulse generator and a second beam guide for guiding the probe beam to said interaction zone in said laser pulse generator.

The laser pulse contrast ratio measurement device further comprises a detection unit for detecting the sum frequency laser pulse generated in said laser pulse generator. The detection unit is arranged after the laser pulse generator which means downstream of said laser pulse generator in the propagation direction of the beam. In other words, the sum frequency laser pulse which is generated in the laser pulse generator first exits the laser pulse generator and thereafter reaches the detection unit.

The probe beam has a probe beam frequency. As is known, a laser pulse comprises a peak amplitude at a certain frequency, e.g. further comprising a Gaussian shaped frequency spectrum around the peak frequency, depending upon the optical setting and e.g. the generation of the primary beam, wherefrom the probe beam evolves.

The reference beam has a reference beam frequency, wherein the reference beam frequency corresponds to the second harmonic of the probe beam frequency. In other words, the reference beam is at double frequency - or half of the wavelength of the probe beam.

The reference beam may evolve from the primary beam, for example in the case a beam splitter is used. However, the reference beam can also be generated by an independent light source, e.g. a laser pulse source which is synchronized with the probe beam.

The probe beam as well as the reference beam can be optimized, e.g. with respect to frequency, intensity or the pulse shape in time (e.g. using a delay or e.g. by broadening the peak) or space (e.g. by focusing or defocusing means).

The beam guide device of the laser pulse contrast ratio measurement device is adapted to direct the reference beam and the probe beam in a non-collinear manner under an interaction angle on said laser pulse generator. In other words, the reference beam and the probe beam are directed such that they hit typically on the same plane side of the laser pulse generator, but not parallel to each other when entering the laser pulse generator. Thus, if the probe beam and the reference beam run through a drift distance just before reaching the laser pulse generator, said probe beam and reference beam are spaced apart from each other at the beginning of said drift distance, but approximate each other while coming closer to the laser pulse generator. When reaching the interaction zone of the laser pulse generator, the probe beam and the reference beam finally overlap. Thus, the probe beam and the reference beam can interact in the interaction zone of the laser pulse generator so as to generate the sum frequency laser pulse in the laser pulse generator.

Interaction in the interaction zone takes place with the probe beam, the reference beam and the molecular grid of the laser beam generator. The laser pulse generator may be a non-linear medium. The non-linear medium may be specifically prepared and calculated for this type of interaction.

The beam guide device is adjusted to provide the interaction angle between the reference beam and the probe beam in the interaction zone in the laser pulse generator. Generally speaking, the beam guide device adjusts said interaction angle to be greater than an angular acceptance of the laser pulse generator. The angular acceptance of the laser pulse generator may depend upon material properties of the laser pulse generator, which comprises, by way of example, BBO (beta-barium borate). The interaction angle adjusted by the beam guide device is greater than 3°. Said interaction angle has the advantage, that background noise is reduced.

For example, by introducing the interaction angle, the reference beam and the probe beam are not directed in the same direction as the outward direction of the sum frequency laser pulse emitted by the laser pulse generator, so that the partial probe beam or reference beam passing through the laser pulse generator without interaction does not overlap with the emitted sum frequency laser pulse. However, on the other side, noise of this type can in an advanced embodiment simply be cancelled out by placing a frequency selective filter (e.g. a band-pass filter such as a coloured window) in the beam path of the sum frequency laser pulse.

With such a frequency selective filter mostly all noise can be cancelled out except for noise close to or at the frequency of the sum frequency laser pulse.

As has been found out, by introducing said interaction angle, also noise generated in the laser beam generator at or close to the frequency of the sum frequency laser pulse can be reduced significantly.

Such noise can be generated in the laser pulse generator due to the observation, that photons may be scattered at the interface and bulk of the laser pulse generator, e.g. a non-linear medium. Therefore, such noise photons can be generated even if only the probe beam passes through the laser pulse generator. Scattered photons (e.g. of only the probe beam) might then combine in a two-step process in the laser pulse generator to photons of the wavelength (or frequency) of the sum frequency laser pulse. By way of example, such a two-step process involves in a first step two photons of the frequency 1ω (of the original probe beam) combining to one photon of the frequency 2ω. In a second step, the combined photon of the frequency 2ω may combine with another photon of the frequency 1ω to a photon of the frequency 3ω. This second step gains benefit of the crystal grid of the laser pulse generator and is especially preferred, if the scattered (combined) 2ω photon has the same direction as the reference pulse when combining to the 3ω photon.

In other words, background noise can be generated in the laser pulse generator by scattering of the 1ω probe beam in the laser pulse generator or at its surface thus generating 2ω photons and if this scattered 2ω photons can find the right phase matching conditions in the case of non-linear crystals to mix with other scattered 1ω photons.

This noise photon of the frequency 3ω typically has the same frequency as the sum frequency laser pulse, and thus constitutes noise which would pass even the bandpass filter, such as the coloured glass window.

As has advantageously been found out, when introducing said interaction angle between the reference pulse and the probe pulse in the laser pulse generator, the generation of such noise photons is significantly reduced. As will be demonstrated later, an increasing interaction angle advantageously decreases the probability of the first combination step.

Additionally, only the probe pulse contributes to generation of said noise photons, whereas the reference pulse can only contribute with a negligible amount to this type of noise photons, further reducing the amount of such noise photons.

The laser pulse contrast ratio measurement device may in a preferred embodiment further comprise a beam splitter for splitting a primary laser pulse into a first and a second replica, the first replica being the reference beam and the second replica being the probe beam. In other words, the primary laser pulse is directed on the beam splitter and passes through the beam splitter so as to split into the probe beam and the reference beam.

In another embodiment of the laser pulse contrast ratio measurement device, the first beam guide may comprise a frequency converter for converting the frequency of the reference beam, for example for doubling the frequency of the reference beam to its second harmonic. The frequency converter is preferably arranged after (i.e. downstream in the propagation direction of the laser beam) the beam splitter.

Preferably, the sum frequency laser pulse generator generates the sum frequency laser pulse by means of type-II phase adaptation. Further preferably, for the generation of the sum frequency laser pulse in the laser pulse generator a phase adaptation is determined such that self-interaction of the probe beam is reduced. In other words, the phase adaptation in the laser pulse generator is calculated e.g. for different interaction angles and the interaction angle may be derived dependent from the result of the phase adaptation showing the least amount of self-interaction of the probe beam, or of the scattering process of the first step of the probe beam.

Preferably, the interaction angle is designed to be larger than 5°, more preferably larger than 10°, or as the case may be, larger than 20°. Thus, the interaction angle which is adjusted by the beam guide device may be adapted to the laser pulse generator, wherein material properties of the laser pulse generator may define an upper angle limit. Therefore, the beam guide device may provide an interaction angle defined to fit to the chosen type of said laser pulse generator.

The interaction angle may be designed, on the other hand, to be smaller than 90°, preferably smaller than 45°, more preferred smaller than 30° or smaller than 25°. The interaction angle such provides for optimal results of the signal-to-noise-ratio of the sum frequency laser beam.

The second beam guide of the laser pulse contrast ratio measurement device may in another embodiment comprise a variable filter device. The variable filter device is advantageously arranged in the beam path of the probe beam after the beam splitter.

By arranging the variable filter device in the beam path of the probe beam, the reference beam is not attenuated by said variable filter device. Thus, the reference beam can maintain its original energy and intensity, allowing for a frequency conversion of the reference beam at a maximum possible converted energy level. This allows e.g. for frequency conversion to be undertaken in saturation condition of the frequency converter, thus resulting in a higher intensity of the reference beam as the conversion efficiency of the input light into light of the reference beam is raised. Using this higher intensity reference beam is of particular interest in combination with said interaction angle due to the fact, that by the interaction angle the probe beam (and reference beam) is/are not directed into the same direction as the sum frequency laser pulse emitted by the laser pulse generator. Thus, also different filters can be introduced to the laser pulse contrast ratio measurement device.

The variable filter device may in an embodiment comprise a filter wheel having selectable attenuators. Further preferred, the variable filter device may be arranged after said beam splitter.

In yet another embodiment, the beam guide device comprises at least one of a one or more deflecting mirror(s), and a variable delay line for introducing a time delay in between the reference beam and the probe beam. By moving mirrors of the variable delay line, the reference beam may "scan" the probe beam. Preferably, the delay line is arranged in the first beam guide.

In a further embodiment, a focussing unit for focussing at least one of the reference beam and the probe beam on or in the laser pulse generator is provided. For example, the focal point or the focal plane can be adjusted to be situated inside the laser pulse generator.

Advantageously, the focussing unit comprises first focussing means for focussing the reference beam and second focussing means for focussing the probe beam in the laser pulse generator. The first and second focussing means can then together provide for a common focal plane in the laser pulse generator.

The first beam guide in cooperation with the second beam guide and the interaction angle can advantageously define a common beam plane. The focussing unit can then be adapted such that said common focal plane is perpendicular to said beam plane, which is defined by the propagation directions of the probe beam and reference beam. Particularly preferred, the focussing unit provides for each of the probe beam and the reference beam a focal plane including a focal plane direction perpendicular to the propagation direction of the respective beam, wherein the focal plane direction of the probe beam is parallel to the focal plane direction of the reference beam.

The focussing unit can also comprise at least one cylinder lens for providing said common focal plane.

The detection unit of the laser pulse contrast ratio measurement device can be designed to be independent of a dynamic range of the probe beam due to the introduction of the variable filter device.

In a particularly preferred embodiment of the laser pulse contrast ratio measurement device, a beam splitter for splitting a primary laser pulse into a first and a second replica, the first replica constituting a reference pulse and the second replica constituting a probe pulse, is provided along with a laser pulse generator for generating a sum frequency laser pulse, the laser pulse generator providing an interaction zone. In this embodiment, further a beam guide device having a first beam guide for guiding the reference beam from said beam splitter to said interaction zone in said laser pulse generator and a second beam guide for guiding the probe beam from said beam splitter to said interaction zone in said laser pulse generator is provided as well as a detection unit for detecting the sum frequency laser pulse generated in said laser pulse generator. According to this embodiment, the first beam guide comprises a frequency converter arranged after - in the direction of the laser beam - the beam splitter for converting the frequency of the reference beam, for example for doubling the frequency of the reference beam to its second harmonic. In this embodiment, the beam guide device is further adapted to direct the reference beam and the probe beam in a non-collinear manner under an interaction angle on said laser pulse generator so that the probe beam and the reference beam interact in the interaction zone of said laser pulse generator so as to generate the sum frequency laser pulse in the laser pulse generator. Finally, in this embodiment the beam guide device is adjusted to provide the interaction angle between the reference beam and the probe beam in the interaction zone in the laser pulse generator to be greater than 3°.

Further according to the invention, a method for determination of a laser pulse contrast ratio is provided. The method comprises providing a reference beam and a probe beam and converting the frequency of the reference beam, e.g. to the second harmonic of the probe beam.

The method further comprises guiding the frequency converted reference beam and the probe beam onto an interaction zone in a laser pulse generator under an interaction angle between the reference beam and the probe beam, the interaction angle being designed to be greater than 3°.

The method further comprises generating, by the interaction of the frequency converted reference beam and the probe beam in the interaction zone, a sum frequency laser pulse in the laser pulse generator, and directing said sum frequency laser pulse to a measurement unit for measuring the sum frequency laser beam.

The method may advantageously further comprise generating a high-energy laser beam and directing said high-energy laser beam on a beam splitter, thereby generating a first and a second replica constituting the reference beam and the probe beam.

The method may further comprise - after generating the first and second replica - filtering the probe beam for reduction of intensity.

Advantageously, in the method the high-energy laser beam may comprise a laser pulse contrast ratio of higher than 10¹¹, for example higher than 10¹².

For the generation of the sum frequency laser pulse in the laser pulse generator a phase adaptation can preferably be determined such that interaction of the probe beam with itself is reduced.

The laser pulse contrast ratio measurement device may preferably be embodied as a third-order cross-correlator for characterization of the contrast of a wave pulse such as a laser pulse. The contrast may be understood as a temporal contrast.

The invention is described in more detail and in view of preferred embodiments hereinafter. Reference is made to the attached drawings wherein like numerals have been applied to like or similar components.

### Brief Description of the Figures

It is shown in
- Fig. 1: Overview of the Petawatt High Energy Laser for Heavy Ion Experiments facility;
- Fig. 2: a first embodiment of a laser pulse contrast ratio measurement device;
- Fig. 3: another first embodiment of a laser pulse contrast ratio measurement device;
- Fig. 4: part schematical of another embodiment of a laser pulse contrast ratio measurement device;
- Fig. 5: schematic of interaction in the laser pulse generator;
- Fig. 6: possible obtainable reduction of noise in BBO;
- Fig. 7: possible obtainable reduction of noise in KDP;
- Fig. 8: measurement results obtained with a setup of the laser pulse contrast ratio measurement device.

### Detailed Description of the Invention

The Petawatt High Energy Laser for Heavy Ion Experiments - short PHELIX 10 - (installation of GSI Helmholtzzentrum fur Schwerionenforschung GmbH) is a high power laser system being capable to generate and provide laser pulses with energies up to 250 J of a duration of about 500 fs, or alternatively up to 1 kJ in 20 ns. By focussing the shorter pulse on a target, intensities of up to 2*10²¹ W/cm² can be obtained. As matter may be ionized starting with intensities in the region of 10⁹ W/cm², the time resolved pulse intensity, as well as its contrast, is a well desired value.

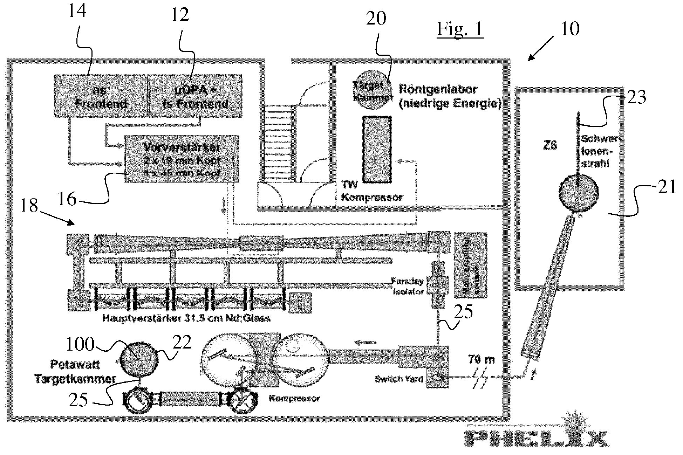

The laser system of PHELIX 10 is shown schematically in Fig. 1 and is divided in a femtosecond front-end (fsFE) 12, a nanosecond front-end (nsFE) 14, a pre- and a main amplifier 16, 18 as well as three target chambers 20, 21, 22 (or experiments). Several different contrast ratios can be selected at the femtosecond front-end 12 of PHELIX 10. At the target chambers 20,21,22, even combined experiments with the heavy ion beam 23 at GSI can be undertaken. By way of example, the laser pulse contrast ratio measurement device 100 can be installed in the Petawatt target chamber 22. The initial beam 25 provided by the PHELIX 10 can thus be directed on the laser pulse contrast ratio measurement device 100.

In the fsFE 12 the initially laser pulse comprises approximately 100 fs, 4 nJ - generated by a commercially available short pulse oscillator Mira900 of Coherent - and is amplified by one optical parametric and two regenerative amplifiers to an energy of several mJ. Thereafter it is amplified in the pre-amplifier 16 by three rod amplifiers to up to 5 J. In the main amplifier 18 - comprising ten amplifier discs - it is amplified to up to 250 J. Herein, also the Chirped Pulse Amplification (CPA) is used.

Although this type of laser generator can provide a high and stable output power as well as a high amplification factor, the amplification may - as any laser amplifier - introduce amplified spontaneous emission of the used laser media (ASE) as well as side peaks, e.g. by reflexions of parts of the beam in the laser generator during amplification.

Finally at PHELIX also an ultra short optical parametric amplifier (uOPA) is installed, wherein the laser pulse is pumped by means of a pump pulse. However, as the uOPA provides amplification of the main peak with practically not rising the pedestal noise floor level, it provides an ultra-high laser beam contrast surpassing such contrast levels measurable by known measurement systems.

Similar laser systems can be found in laboratories around the world. This includes the Vulcan laser (UK), LULI pico2000 (France), Omega-EP (USA), Firex (Japan) and also commercially available lasers systems from companies like Thales laser or Amplitude Technologies.

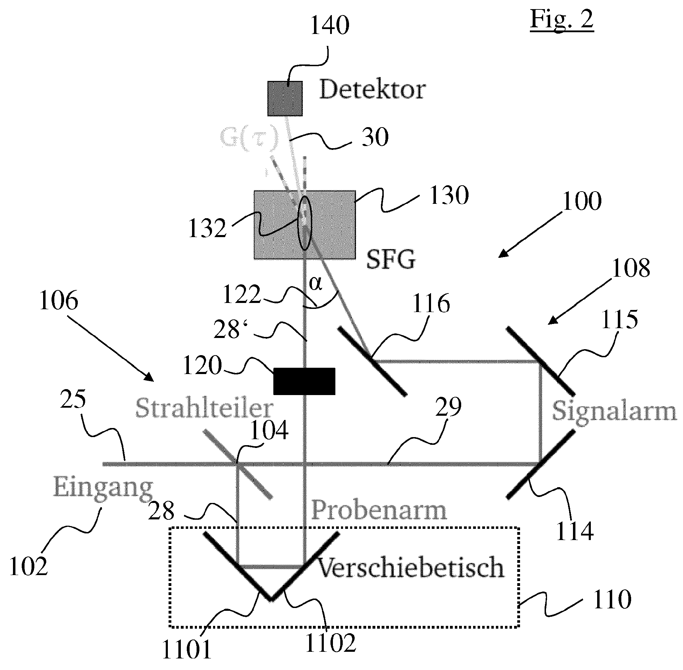

Fig. 2 shows a first embodiment of the invention. The laser pulse contrast ratio measurement device 100 has an input for the initial beam 25 to be fed into the laser pulse contrast ratio measurement device 100. In this embodiment, the initial beam 25 is directed onto a beam splitter 104 for separating the beam into a first and a second replica 28,29. The first replica 28 constitutes the reference pulse 28, the second replica the probe pulse 29. In a first beam guide 106 the reference pulse 28 is directed on a variable delay line 110 having movable mirrors 1101, 1102. By the variable delay line 110 the reference pulse 28 can be delayed with respect to the probe pulse 29. When interacting in the laser pulse generator 130, the reference pulse 28 can thus "scan" the probe pulse 29, as interaction between these two pulses only occurs when both pulses are coincidently present in the laser pulse generator 130.

After passing the variable delay line 110 of the first beam guide 106, the reference beam 28 is directed by means of the first beam guide 106 on a frequency converter 120. The frequency ω of the reference beam 28 of this embodiment is converted by means of the frequency converter 120 to its second harmonic 2ω. In the first beam guide 106, the frequency converted reference beam 28' is then directed on an interaction zone 132 in the laser pulse generator 130.

The probe beam 29 is guided by means of the second beam guide 108 to the same interaction zone 132 in the laser pulse generator 130, wherein the beam guide device 116 is aligned to provide, between the reference beam 28' and the probe beam 29, an interaction angle 122 of at least 3° or more.

By interaction of the probe beam 29 with the reference beam 28' in the interaction zone 132 of the laser pulse generator 130, a sum frequency laser pulse 30 is generated, which is directed thereafter on a detection unit 140 for detection of the sum frequency laser pulse 30.

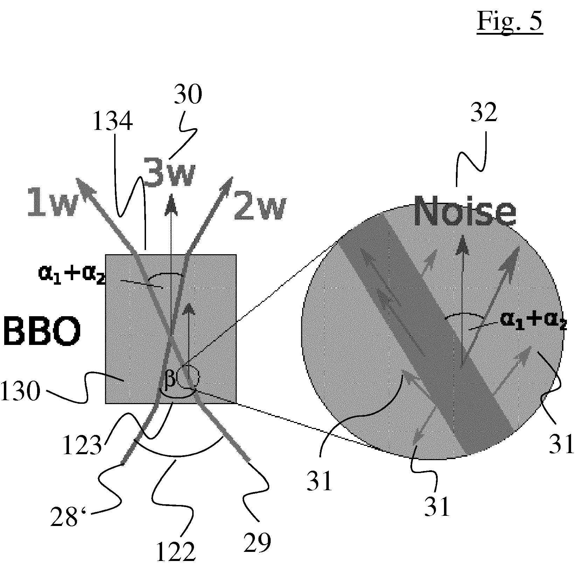

Fig. 5 depicts a schematic representation of one of the most important noise sources in the laser pulse contrast ratio measurement device 100, which therefore limits the obtainable contrast. The probe beam 29 is directed on the laser pulse generator 130 and enters said under a certain, precalculated angle. At the surface of the laser pulse generator 130, some photons 31 may be scattered in a first step and may be scattered multiple times in the laser pulse generator 130. If said photons 31 pass through the laser pulse generator 130 in a direction which corresponds to the direction of the reference beam 28 (but independent of the actual presence of said reference beam 28) the photons 31 can interact in a second step to generate a second-order beam 31' on a frequency 2ω. The other way round, frequency conversion to 2ω and later scattering is also possible. If said second-order beam 31' again interacts with the probe beam 29, noise photons 32 may be emitted in the direction of the sum frequency laser beam 30, and thus in the angular direction observed by the detection unit 140. By introducing the interaction angle 122, the second step 31 (frequency conversion) is significantly reduced. As can be seen in Fig. 5, the angle β 123 inside the laser pulse generator 130 may differ from the interaction angle 122 due to refraction effects. However, the interaction angle 122 is typically defined outside the laser pulse generator 130, e.g. at the surface of the laser pulse generator 130.

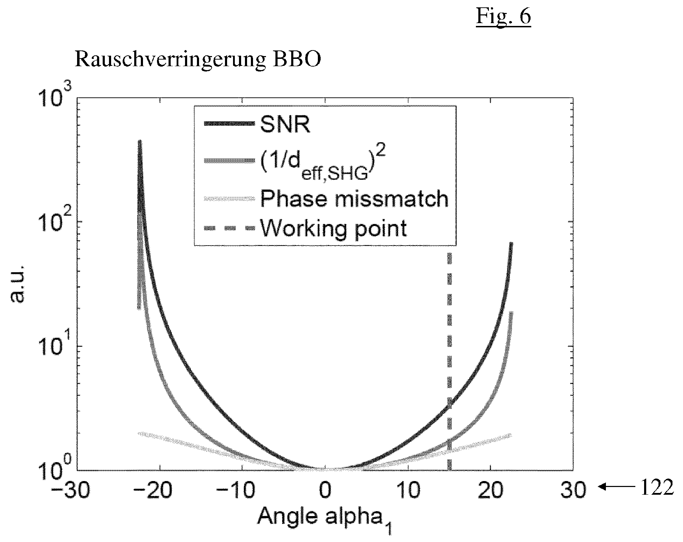

For example, said reduction of noise 32 for selected interaction angles 122 is calculated for a non-linear beta-barium borate (BBO) crystal as the laser pulse generator 130 and presented in Fig. 6. It can be seen, that the noise 32 can be increasingly reduced by increasing said interaction angle 122. However, for example a material property of the laser pulse generator 130, such as the crystal geometry, may limit the maximum usable interaction angle. In the case of a laser working at the central wavelength of 1054 nm, this angle equals about 30° for BBO. Simulation results show a best increase in SNR with interaction angles 122 in a regime of 15° to 25° for BBO, wherein an interaction angle 122 of 22° has been experimentally found out to be very promising for significant reduction of noise 32.

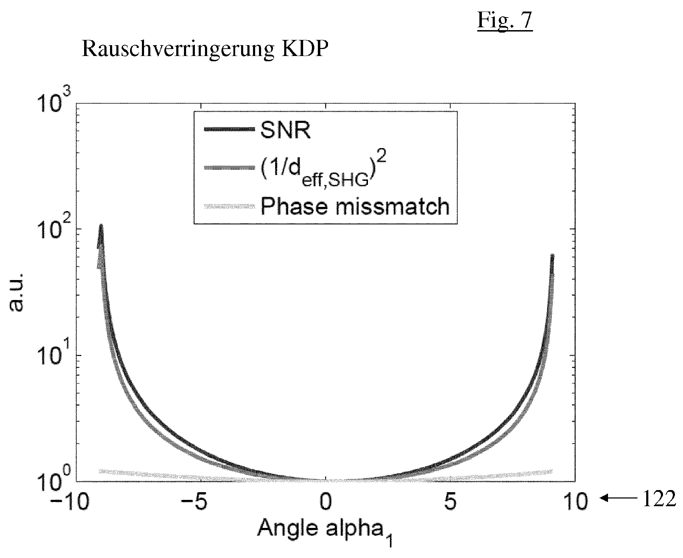

In another example of Fig. 7, said reduction of noise 32 is calculated dependent from the interaction angle 122 for a non-linear Potassium Dihydrogen Phosphate (KDP) crystal as the laser pulse generator 130. As can be derived from Fig. 7, a lower overall SNR increase is expected in comparison to BBO.

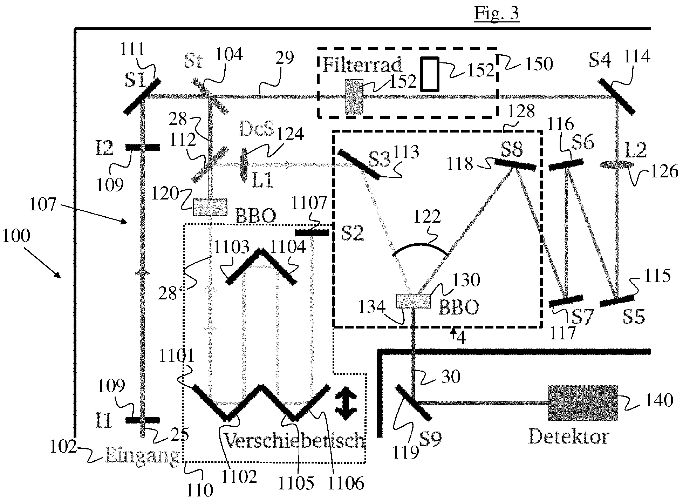

Turning now to Fig. 3, an initial beam 25 is fed into the laser pulse contrast ratio measurement device 100 and directed on a beam splitter 104 by means of two irises 109 and a mirror 111 of the beam guide device 107. The two irises 109 and mirror 111 align the initial beam 25 and define an initial beam axis of the initial beam 25. By this, coupling in of the laser pulse is optimized. The beam splitter 104 splits the initial beam 25 into a reference beam 28 and a probe beam 29.

The reference beam 28 passes after said beam splitter 104 a dichroic mirror 112, the dichroic mirror 112 being frequency selective. By way of example, the dichroic mirror 112 can be designed to let transmit infrared light and to reflect green light pulses. By means of the dichroic mirror 112, the reference beam 28 can pass the sequence of the adjustable delay line 110 arranged downstream of the dichroic mirror 112 two times, which is explained in more detail.

First, the incoming reference beam 28 emitted from the beam splitter 104 passes straight through the dichroic mirror 112 and advances further to the frequency converter 120, in this case a BBO crystal 120. While passing the frequency converter 120, the reference beam 28 is converted to the frequency converted reference beam 28', as the BBO crystal is designed to convert the frequency of the initial reference beam 28. By way of example, the BBO converts a wavelength I₁ of the initial reference beam 28 of 1054 nm to a wavelength I₂ of the converted reference beam 28' of 527 nm.

After being emitted from the frequency converter 120, the reference beam 28' is directed to an adjustable delay line 110 and passes therein several reflective mirrors 1101, 1102, 1103, 1104, 1105, 1106, 1107. From the last reflective mirror, the reference beam 28' is folded on itself, which is retro-reflected, and passes the same variable delay line 110 a second time. Thus, a significant increase in delay variation can be obtained.

The frequency converted reference beam 28' passes the frequency converter 120 a second time but remains unaltered this time. Finally, the frequency converted reference beam 28' is directed a second time on the dichroic mirror 112, wherein the dichroic mirror 112 is reflective for the frequency of the frequency converted reference beam 28', therefore reflecting the reference beam 28' in direction of the reflective mirror 113. Thereafter and by means of the beam guide device the reference beam 28' is directed under the interaction angle 122 - with respect to the incidence of the probe beam 29 - onto the laser pulse generator 130.

The probe beam 29 passes a variable filter device 150 comprising several filter units 152. By way of example, the variable filter device 150 comprises six different filters 152 having six different filter intensities allowing for a transmission of e.g. first 100% (which is 10°), second 1% (which is 10⁻²) third 0,01% or 10⁻⁴, fourth 10⁻⁶, fifth 10⁻⁸ and sixth a beam block having a transmission of 0 (e.g. totally absorptive). However, said variable filter device can also comprise more filters or less filters and can comprise e.g. a smooth filter element which allows for a non-discrete filter intensity, e.g. by moving the smooth filter element or by applying an electrical field to the smooth filter element.

By introducing said variable filter device 150, the intensity of the sum frequency laser beam 30 generated later in the laser pulse generator 130 can be adapted, so that the detection unit 140 does not need to be able to cover e.g. the desired 13 orders of magnitude. However, it has been found out that filtering of the probe beam 29 is sufficient, as the energy of the sum frequency laser beam 30 already decreases. In an advantageous manner, the reference beam 28, 28' can thus be kept at maximal energy, so that the conversion efficiency in the frequency converter 120 is maximized.

Therefore, the variable filter device 150 allows for maximizing the signal intensity in low intensity regimes as e.g. the pedestal (noise floor) level as well as stabilizing signal intensity to a certain level, e.g. on the rising or falling slope of the peak signal. Thus, as a matter of fact, also a different measurement unit 140, which may be cheaper or more reliable, may be utilized in the present laser pulse contrast ratio measurement device 100. It can also be achieved that the beam guide device 107 - comprising the variable filter device 150 - is designed such that the measurement unit 140 is made independent from the laser pulse intensity.

The sum frequency laser pulse 30 can be guided by a reflective mirror 119 or other means to the measurement unit 140, e.g. in order to further reduce the installation space of the laser pulse contrast ratio measurement device 100.

The reference beam 28' passes a focusing unit 124 for defining a focus shape of the reference beam 28' in the laser pulse generator 130. The probe beam 29 passes a second focusing unit 126 to define a focus shape of the probe beam 29 in the laser pulse generator 130. The beam is focused such, that in a beam plane 128, that is defined by the reference beam 28', the probe beam 29 and the interaction angle 122 in between the both, the beams 28', 29 keep focused, but are not focused in a plane perpendicular to said beam plane 128. This has several advantages. First, by not focusing the beams 28', 29, the intensity of laser light in the laser pulse generator 130 is lowered, resulting in the fact, that higher total amount of photons (or intensity) can be coupled in the crystal structure of the laser pulse generator 130 and are tolerated without destruction of said. But if the beam was defocused in the beam plane 128 (orientation of beam plane 128 is depicted in Fig. 3), a time uncertainty in between the two beams would be introduced, which effect is known as single-shot effect. Said single-shot effect would decrease the obtainable temporal resolution. The focal length of the focusing unit 124 of the depicted embodiment of the Fig. 3 selected to be 30 cm. The focal length of the second focusing unit 126 is selected to be 100 cm, which e.g. allows for the higher intensity probe beam 29, which may have the higher intensity due to the fact, that it is not dependent on a conversion probability of the frequency converter 120.

The probe beam 29 and the reference beam 28' are sketched to be having a constant width 129a, 129b in the focal plane direction 129, which is their respective long dimension. However, the beams 28' and 29 can also be defocused in the focal plane direction or being collimated, depending e.g. on the beam intensities and/or the material to be irradiated by the beams 28', 29. The reference beam 28' is e.g. focused by the focusing unit 124 from a width of 6.5 mm to a width of 31 µm in the direction of the beam plane 128 at the interaction zone 132 in the laser pulse generator 130. But the width of the reference beam 28' in the long extension direction 129a perpendicular to the beam plane 128 is kept constant at 6.5 mm. The probe beam 29 is e.g. focused by the second focusing unit 126 from the same width of 6.5 mm to a width of 103 µm in the direction of the beam plane 128 at the interaction zone 132 in the laser pulse generator 130. The width of the probe beam 29 in a long extension direction 129b perpendicular to the beam plane 128 is kept constant in this embodiment.

As the detection unit 140 is made independent of the distribution of the photons with respect to space or time, and as the dynamic range of the detection unit 140 does only need to cover the range in between two filter units of the variable filter device 150, i.e. two orders of magnitude, as detector the photomultiplier module H10722-210 of Hamamatsu can be used. The quantum efficiency, according to the manufacturer, is in the range of 30% having a time resolution of about 50 µs.

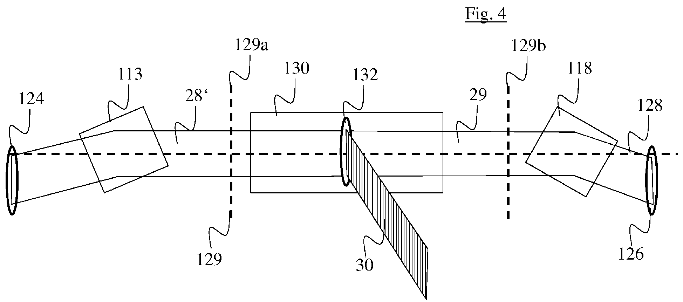

Turning now to Fig. 4, a slight perspective side view of a part of a laser pulse contrast ratio measurement device 100 is depicted. The view direction of the setup of Fig. 4 - although not sketched identical to that of Fig. 3 - is depicted in Fig. 3 with an indicating arrow 4 below the laser pulse generator 130. Therefore, Fig. 4 depicts a top view on the backside 134 - which is the emitting side - of the laser pulse generator 130, the sum frequency laser pulse 30 being in front of said backside 134, the reference and probe beams 28', 29 being seen behind the laser pulse generator 130.

The reference beam 28' of the depicted embodiment of Fig. 4 is - when coupling into the laser pulse generator 130 - a line-shaped laser beam pulse having a narrow dimension in the direction of the beam plane 128 and a long dimension in a direction perpendicular to said beam plane. The reference beam 28' - in the vicinity of or inside the laser pulse generator 130 or in the interaction zone 132 of the laser pulse generator 130 - thus may have a long dimension in a direction perpendicular to said beam plane 128 many times the narrow dimension, e.g. about 200 times larger than the narrow dimension.

The probe beam 29 is also a line-shaped laser beam pulse having a narrow dimension in the direction of the beam plane 128 and a long dimension in a direction perpendicular to said beam plane. The probe beam 29 - in the vicinity of or inside the laser pulse generator 130 or in the interaction zone 132 of the laser pulse generator 130 - thus may have a long dimension in a direction perpendicular to said beam plane 128 many times the narrow dimension, e.g. about 50 times larger than the narrow dimension.

The elongated probe beam 29, when coupled into the interaction zone 132 of the laser pulse generator 130, thus interacts with the elongated reference beam 28', when both coincidently are coupled into the interaction zone 132 of the laser pulse generator 130. Due to the beam shape of both beams having each a narrow dimension in the beam plane 128 and their elongated dimension parallel to each other and perpendicular to the beam plane 128, the interaction takes place in a narrow region in the direction of the beam plane 128 but over a wide regime in the direction perpendicular to the beam plane 128. Thus, the interaction zone 132 comprises an orientation which has a narrow width in the direction of the beam plane 128 and an elongated extension in the direction perpendicular to the beam plane 128, as can be seen in Fig. 4. This leads to the advantageous result, that first the interaction takes place in a highly time-synchronous manner, thereby reducing significantly the single-shot effect. Second, by the elongation of the interaction zone 132 in the direction perpendicular to the beam plane 128, the intensity in the laser pulse generator 130 is lowered, so that the beam energy of e.g. the probe beam 29 or the reference beam 28,28' can be increased.

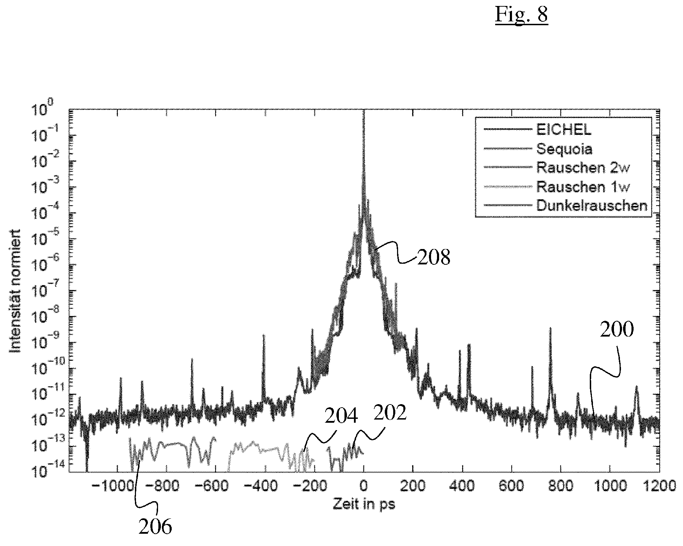

Fig. 8 finally shows a measured laser pulse signal 200 of a sum frequency laser beam 30 generated by the laser beam generator 130 of the laser pulse contrast ratio measurement device 100. The signal amplitudes of the setup without any beam 202, with single beam intensities of the probe beam 204 and of the reference beam 206 is given as well. Also a comparison to results of a known measurement device 208 is depicted, whereas this measurement stops far before reaching the pedestal noise floor level.

As a summarization of the above described parts of the invention, wherein each part comprises features which by its own may depict an invention alone, a further embodiment shall be described which contains all of that features in a combined embodiment of the laser pulse contrast ratio measurement device 100.

This laser pulse contrast ratio measurement device 100 comprises a beam splitter 104 for splitting a primary laser pulse 25 into a first and a second replica, the first replica constituting a reference pulse 28, 28' and the second replica constituting a probe pulse 29, a laser pulse generator 130 for generating a sum frequency laser pulse 30, the laser pulse generator providing an interaction zone 132, a beam guide device 107 having a first beam guide 106 for guiding the reference beam 28, 28' from said beam splitter to said interaction zone in said laser pulse generator and a second beam guide 108 for guiding the probe beam 29 from said beam splitter to said interaction zone in said laser pulse generator, a detection unit 140 for detecting the sum frequency laser pulse generated in said laser pulse generator, the first beam guide comprising a frequency converter 120 arranged after the beam splitter for converting the frequency of the reference beam, for example for doubling the frequency of the reference beam to its second harmonic, wherein the beam guide device is adapted to direct the reference beam and the probe beam in a non-collinear manner under an interaction angle 122 on said laser pulse generator so that the probe beam and the reference beam interact in the interaction zone of said laser pulse generator so as to generate the sum frequency laser pulse in the laser pulse generator, wherein the beam guide device is adjusted to provide the interaction angle between the reference beam and the probe beam to be greater than 3°; and further comprises a variable filter device 150 being arranged after said beam splitter 104 as well as a focussing unit 124, 126 for focussing at least one of the reference beam 28, 28' and the probe beam 29 on or in the laser pulse generator 130.

It will be appreciated that the features defined herein in accordance with any aspect of the present invention or in relation to any specific embodiment of the invention may be utilized, either alone or in combination with any other feature or aspect of the invention or embodiment. In particular, the present invention is intended to cover a measurement device configured to include any feature described herein. It will be generally appreciated that any feature disclosed herein may be an essential feature of the invention alone, even if disclosed in combination with other features, irrespective of whether disclosed in the description, the claims and/or the drawings.

It will be further appreciated that the above-described embodiments of the invention have been set forth solely by way of example and illustration of the principles thereof and that further modifications and alterations may be made therein without thereby departing from the scope of the invention.

### List of reference signs:

- 4: view direction
- 10: PHELIX Laser facility
- 12: femtosecond front-end (fsFE)
- 14: nanosecond front-end (nsFE)
- 16: pre-amplifier
- 18: main amplifier
- 20: target chamber
- 21: target chamber
- 22: target chamber
- 23: ion beam
- 25: initial beam
- 28: reference beam
- 28': frequency converted reference beam
- 29: probe beam
- 30: sum frequency laser beam
- 31: noise photons
- 32: noise
- 100: laser pulse contrast ratio measurement device
- 102: input
- 104: beam splitter
- 106: first beam guide
- 107: beam guide device
- 108: second beam guide
- 109: iris
- 110: variable delay line
- 1101: (movable) mirror
- 1102: (movable) mirror
- 1103: (movable) mirror
- 1104: (movable) mirror
- 1105: (movable) mirror
- 1106: (movable) mirror
- 1107: (movable) mirror
- 111: mirror
- 112: dichroic mirror
- 113: mirror
- 114: mirror
- 115: mirror
- 116: mirror
- 117: mirror
- 118: mirror
- 119: mirror
- 120: frequency converter
- 122: interaction angle
- 124: focusing unit
- 126: focusing unit
- 128: beam plane
- 129: common focal plane
- 129a: long extension dimension of reference beam
- 129b: long extension dimension of probe beam
- 130: laser pulse generator
- 132: interaction zone
- 134: backside of laser pulse generator 130
- 140: detection unit
- 150: variable filter device
- 152: filter unit
- 200: laser pulse signal
- 202: dark noise
- 204: single beam noise
- 206: single beam noise
- 208: comparative signal

## Claims

1. Laser pulse contrast ratio measurement device (100), comprising:
a laser pulse generator (130) for generating a sum frequency laser pulse (30), the laser pulse generator providing an interaction zone (132),
a beam guide device (107) having a first beam guide (106) for guiding a reference beam (28, 28') to said interaction zone in said laser pulse generator and a second beam guide (108) for guiding a probe beam (29) to said interaction zone in said laser pulse generator, a detection unit (140) for detecting the sum frequency laser pulse generated in said laser pulse generator,
the probe beam having a probe beam frequency,
the reference beam having a reference beam frequency,
wherein the reference beam frequency corresponds to the second harmonic of the probe beam frequency,
wherein the beam guide device is adapted to direct the reference beam and the probe beam in a non-collinear manner under an interaction angle (122) on said laser pulse generator so that the probe beam and the reference beam interact in the interaction zone of the laser pulse generator so as to generate the sum frequency laser pulse in the laser pulse generator, and
wherein the beam guide device is adjusted to provide the interaction angle between the reference beam and the probe beam to be greater than 3°.

2. Laser pulse contrast ratio measurement device (100) according to the preceding claim, further comprising
a beam splitter (104) for splitting a primary laser pulse (25) into a first and a second replica, the first replica being the reference beam (28, 28') and the second replica being the probe beam (29).

3. Laser pulse contrast ratio measurement device (100) according to one of the preceding claims,
the first beam guide (106) comprising a frequency converter (120) for converting the frequency of the reference beam (28, 28'), for example for doubling the frequency of the reference beam to its second harmonic.

4. Laser pulse contrast ratio measurement device (100) according to one of the preceding claims,
wherein the sum frequency laser pulse generator (130) generates the sum frequency laser pulse (30) by means of type-II phase adaptation, and/or
wherein for the generation of the sum frequency laser pulse (30) in the laser pulse generator (130) a phase adaptation is determined such, that self-interaction of the probe beam (29) is reduced.

5. Laser pulse contrast ratio measurement device (100) according to one of the preceding claims,
the interaction angle (122) being greater than 5°, preferably greater than 10°.

6. Laser pulse contrast ratio measurement device (100) according to one of the preceding claims,
the second beam guide device (108) further comprising a variable filter device (150).

7. Laser pulse contrast ratio measurement device (100) according to the preceding claim, the variable filter device (150) comprising selectable radiation filters (152).

8. Laser pulse contrast ratio measurement device (100) according to claim 2 and one of the claims 6 or 7,
the variable filter device (150) being arranged after said beam splitter (104).

9. Laser pulse contrast ratio measurement device (100) according to one of the preceding claims,
wherein the beam guide device (107) comprises at least one of a one or more deflecting mirror(s) (111, 112, 113, 114, 115, 116, 117, 118, 119), and a variable delay line (110) for introducing a time delay in between the reference beam (28, 28') and the probe beam (29).

10. Laser pulse contrast ratio measurement device (100) according to one of the preceding claims,
further comprising a focussing unit (124, 126) for focussing at least one of the reference beam (28, 28') and the probe beam (29) on or in the laser pulse generator (130).

11. Laser pulse contrast ratio measurement device (100) according to the preceding claim, wherein the focussing unit (124, 126) comprises first focussing means (124) for focussing the reference beam (28, 28') and second focussing means (126) for focussing the probe beam (29) in the laser pulse generator (130),
the first and second focussing means together providing a common focal plane (129) in the laser pulse generator.

12. Laser pulse contrast ratio measurement device (100) according to the preceding claim, wherein the first beam guide (106) in cooperation with the second beam guide (108) and the interaction angle (122) define a common beam plane (128) and,
wherein the focussing unit (124, 126) is adapted such, that said common focal plane (129) is perpendicular to said beam plane.

13. Laser pulse contrast ratio measurement device (100) according to one of claims 10,11 or 12,
the focussing unit (124, 126) comprising at least one cylinder lens for providing said common focal plane (129).

14. Laser pulse contrast ratio measurement device (100) according to one of the preceding claims,
wherein the detection unit (140) is independent from a dynamic range of the probe beam (29).

15. Laser pulse contrast ratio measurement device (100), comprising:
a beam splitter (104) for splitting a primary laser pulse (25) into a first and a second replica, the first replica constituting a reference pulse (28, 28') and the second replica constituting a probe pulse (29),
a laser pulse generator (130) for generating a sum frequency laser pulse (30), the laser pulse generator providing an interaction zone (132),
a beam guide device (107) having a first beam guide (106) for guiding the reference beam (28, 28') from said beam splitter to said interaction zone in said laser pulse generator and a second beam guide (108) for guiding the probe beam (29) from said beam splitter to said interaction zone in said laser pulse generator,
a detection unit (140) for detecting the sum frequency laser pulse generated in said laser pulse generator,
the first beam guide comprising a frequency converter (120) arranged after the beam splitter for converting the frequency of the reference beam, for example for doubling the frequency of the reference beam to its second harmonic,
wherein the beam guide device is adapted to direct the reference beam and the probe beam in a non-collinear manner under an interaction angle (122) on said laser pulse generator so that the probe beam and the reference beam interact in the interaction zone of said laser pulse generator so as to generate the sum frequency laser pulse in the laser pulse generator,
wherein the beam guide device is adjusted to provide the interaction angle between the reference beam and the probe beam to be greater than 3°.

16. Method for determination of a laser pulse contrast ratio, for example using the device (100) according to one of the preceding claims, comprising the following steps:
providing a reference beam (28, 28') and a probe beam (29),
converting the frequency of the reference beam, e.g. to the second harmonic of the probe beam,
guiding the frequency converted reference beam and the probe beam onto an interaction zone (132) in a laser pulse generator (130) under an interaction angle (122) in between the reference beam and the probe beam, the interaction angle being designed to be greater than 3°,
generating, by the interaction of the frequency converted reference beam with the probe beam, a sum frequency laser pulse (30) in the laser pulse generator, and
directing said sum frequency laser pulse to a measurement unit (140) for measuring the sum frequency laser beam.

17. Method according to the preceding claim, further comprising the step
initially generating a high-energy initial laser beam (25) and directing said high-energy initial laser beam on a beam splitter (104), thereby generating a first and a second replica constituting the reference beam (28, 28') and the probe beam (29).

18. Method according to the preceding claim, further comprising the step attenuating the probe beam (29) in a second beam guide (108) for reduction of intensity.

19. Method according to one of the claims 16 to 18,
wherein the high-energy initial laser beam (25) comprises a laser pulse contrast ratio of higher than 10¹¹, for example higher than 10¹².

20. Method according to one of the claims 16 to 19,
wherein for the generation of the sum frequency laser pulse (30) in the laser pulse generator (130) a phase adaptation is determined such, that interaction of the probe beam (29) with itself is reduced.
